Europäisches Patentamt

European Patent Office

Office européen des brevets

(11) Veröffentlichungsnummer : **0 175 936**
**B1**

(12) **EUROPÄISCHE PATENTSCHRIFT**

(45) Veröffentlichungstag der Patentschrift :
09.11.88

(51) Int. Cl.⁴ : **G 02 B   6/42**, G 02 B   6/26,
**H 01 L  31/02**

(21) Anmeldenummer : 85110613.8

(22) Anmeldetag : 23.08.85

(54) Optoelektronische Anordnung.

(30) Priorität : 24.09.84 DE 3435013

(43) Veröffentlichungstag der Anmeldung :
02.04.86 Patentblatt 86/14

(45) Bekanntmachung des Hinweises auf die Patenterteilung : 09.11.88 Patentblatt 88/45

(84) Benannte Vertragsstaaten :
DE FR GB NL SE

(56) Entgegenhaltungen :
EP-A- 0 017 701
EP-A- 0 054 300
EP-A- 0 078 364
EP-A- 0 111 263
WO-A-82 /028 00
FR-A- 2 440 563

(73) Patentinhaber : Siemens Aktiengesellschaft Berlin
und München
Wittelsbacherplatz 2
D-8000 München 2 (DE)

(72) Erfinder : Langenwalter, Michael, Dr.-Phil.
Schulerstrasse 8
D-8035 Stockdorf (DE)
Erfinder : Später, Lothar, Dipl.-Ing.
Am Klingelberg 21
D-6747 Annweiler (DE)

## Beschreibung

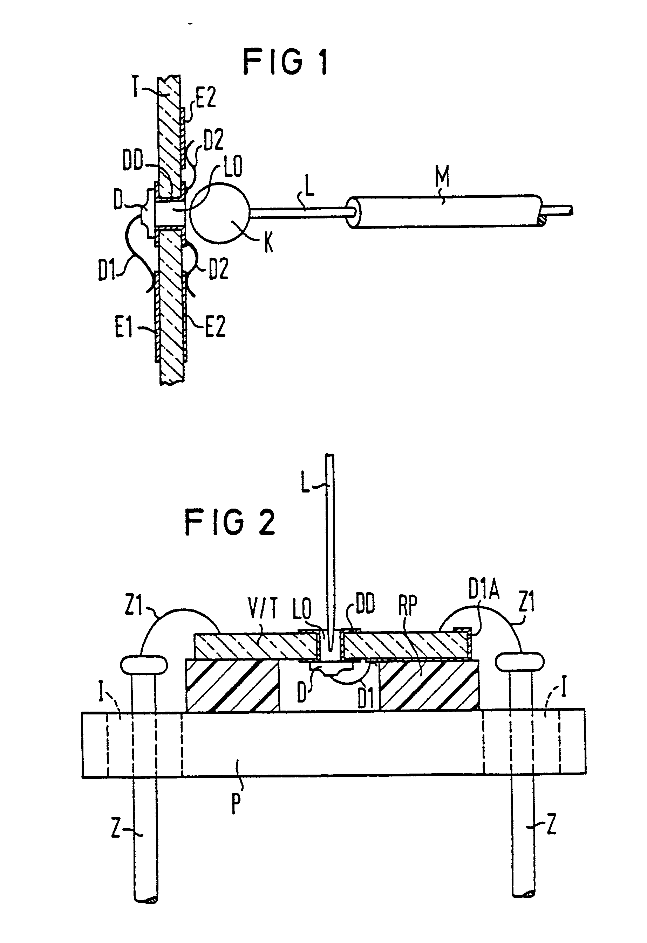

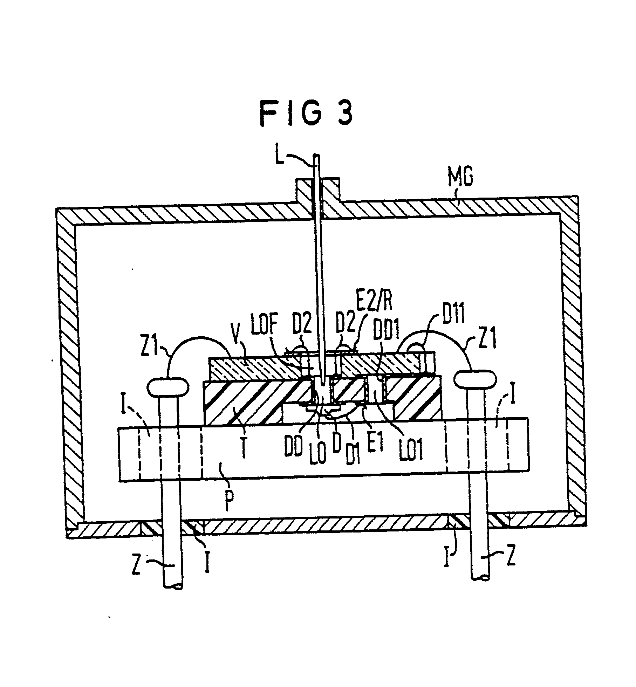

Die Erfindung betrifft eine Weiterbildung der speziellen optoelektronischen Anordnung, welche im Oberbegriff des Patentanspruches 1 definiert ist. Merkmale, die im Oberbegriff des Patentanspruches 1 genannt sind, sind in der Patentschrift EP A1-17701 enthalten. Sie sind zudem aus der DE-OS 32 44 852, Fig. 2, 3 und 5 vorbekannt. Ähnliche Anordnungen sind aus den älteren, noch nicht veröffentlichten Schriften DE-OS 33 11 038, 33 37 131, 34 06 424, 34 29 234 und 34 29 282 entnehmbar.

Die Erfindung wurde ansich vor allem als eine Variante der in den Anmeldungen P 34 06 424, Fig. 2, ferner P 34 29 234, Fig. 3 und P 34 29 282 beschriebenen optoelektronischen Anordnungen weiterentwickelt. Dementsprechend gilt die Offen-barung dieser Anmeldung voll umfänglich als hier in die vorliegende Anmeldung mit aufgenommen. Die Erfindung ist jedoch darüberhinaus auf andere, durch den Oberbegriff des Patentanspruches 1 definierte optoelektronische Anordnung anwendbar, sodaß sie in einer eigenen Anmeldung erfaßt wird.

Nachteile ergeben sich in der Anordnung nach EP A1-17701 durch die Lichtverluste, an den Stellen, wo das Lichtleitsystem an ein Koppelstück herangeführt ist, von dem aus ein weiteres Leiterstück weiterführt. Bei der genannten Anordnung entsteht zusätzlicher Fertigungsaufwand, weil das weitere Leiterstück in ein hohles Metallpin, das dem metallischen Belag der Anordnung der vorliegenden Anmeldung entspricht, eingeklebt werden muß.

Die Aufgabe der Erfindung besteht darin, einen möglichst einfachen Aufbau der Verbindung des Lichtleitsystems mit dem optischen Bauelement zu ermöglichen und sowohl die obere Grenzfrequenz der Anordnung weiter zu erhöhen, z. B. auf weit über 600 MBit/sec, als auch die Lichtverluste zwischen dem Bauelement und dem Lichtleitsystem möglichst weiter zu verringern, zumindest jedoch nicht wesentlich durch die Grenzfrequenzerhöhung zu beeinträchtigen.

Die Aufgabe der Erfindung wird durch die im Patentanspruch 1 angegebenen Maßnahmen gelöst. Ein in ein Loch eingeklebtes Leiterstück wird vermieden. Der metallische Belag kann somit einerseits dazu dienen, mittels möglichst kurzer, möglichst breiter, also eigeninduktivitätsarmer (und oft auch eigenkapazitätsarmer) Zuleitungen diesen und diesen zu verbessern und diesen hochfrequenzmäßig günstigen Belag der Lochwandung zugleich als Reflektor für gestreutes Licht bei Bedarf so ausnutzen zu können, daß sogar eine Verringerung der Lichtverluste trotz der Verbesserung der Grenzfrequenz erreichbar ist.

Die in den Unteransprüchen angegebenen zu-sätzlichen Maßnahmen gestatten zusätzliche Vor-teile. Es gestatten nämlich die Maßnahmen gem.

Patentanspruch

2. die zweite Zuleitung von der ersten Zuleitung kapazitiv gut zu trennen und damit kapazitive Überbrückungen des Bauelementes zu verringern,

3. auch die zweite Zuleitung eigeninduktivitätsarm zu strukturieren und trotzdem beide Zuleitungen an die dem Bauelement abgewandte Oberfläche des Trägers zu führen,

4. unkompliziert in für Massenfertigung geeigneter Weise die zweite Zuleitung mit der entsprechenden Kontaktstelle des Bauelementes zu verbinden,

5. ganz besonders eigeninduktivitätsarm die zweite Zuleitung mit der entsprechenden Kontaktstelle des Bauelementes zu verbinden.

6. den Träger gleichzeitig als einen Verstärker auszunützen, welcher die vom Bauelement op-tisch gesendeten/empfangenen Signale seiner-seits elektrisch als Vorverstärker oder Nachverstärker verstärkt.

7. die Schaltkapazität zwischen dem Bauelement und den Zuleitungen einerseits und dem Halbleiterkörper/Verstärker andererseits zu ver-ringern und damit die Grenzfrequenz der Anordnung weiter zu erhöhen, sowie

8. die elektrische Abschirmung und die mechanische Stabilität der im allgemeinen eine sehr hohe Justierpräzision erfordernden Anordnung zu verbessern bzw. zu gewährleisten.

Das Prinzip der Erfindung und ihrer Weiterbildungen wird anhand der in den Figuren schema-tisch gezeigten Ausführungsbeispiele weiter er-läutert, wobei die Figuren der Übersichtlichkeit wegen nur schematisch die wichtigsten Bestandteile der Erfindung zeigen. Hierbei zeigen die Figur

1 die elektrische und optische Ankopplung des Bauelementes,

2 ein anderes Beispiel dieser Ankopplung, mit einer besonders kurzen eigeninduktivitätsarmen Ankopplung des Bauelements über seine erste Zuleitung an entsprechende Anschlüsse des zugleich als Verstärker dienenden Trägers, sowie

3 ein in Fig. 2 weitgehend entsprechendes Beispiel, bei welchem aber die Eigenkapazität des Bauelementes und (insbes. ersten) Zuleitungen, bezogen auf den Verstärkerchip, besonders klein ist, wodurch eine besonders hohe Grenzfrequenz erreichbar ist.

Alle Figuren zeigen also Ausführungsbeispiele der erfindungsgemäßen optoelektronischen Anordnung zur Umsetzung von Licht in Spannung bzw. Strom oder von Spannung bzw. Strom in Licht.

Alle gezeigten Anordnungen weisen ein Lichtleitsystem mit einer Glasfaser L auf, wobei diese Glasfaser L entweder, vgl. Fig. 1, über eine Kugellinse K oder, vgl. Fig. 2 und 3, über eine « Taper »- genannte Spitze auf die optisch aktive Stelle des Bauelements D gerichtet ist. Dieses Bauelement D ist hierbei stets auf der Rückseite des Trägers T, bezogen auf das Lichtleitsystem L, angebracht, wobei der Träger T jeweils ein Loch LO aufweist.

durch welches hindurch das Lichtleitsystem L mit der optisch aktiven Stelle des Bauelements D optisch gekoppelt ist. Das Bauelement D ist also beim Loch LO auf der Rückseite des Trägers T befestigt.

Das Bauelement D kann z. B. ein Festkörper-Laser oder eine Fotodiode sein, z. B. eine In-GaAs/InP-Fotodiode gemäß telcom report 6 (1983), Beiheft « Nachrichtenübertragung mit Licht ». Seite 97 bis 101.

Das Lichtleitsystem kann im Prinzip an sich einen beliebigen Aufbau haben und in beliebiger Weise mechanisch mit dem Träger T starr gekoppelt sein. In Fig. 1 wurde nur schematisch ein Mantel M angedeutet und in Fig. 3 ein Metallgehäuse MG. Insbesondere dieses Metallgehäuse MG kann nicht nur zu elektrischen und optischen Abschirmung der Anordnung gegenüber Störeinflüssen aus der Umgebung dienen, sondern auch zur starren mechanischen Verbindung zwischen dem Träger T und dem Lichtleitsystem L, und zwar, besonders auch in einer Weise, wie sie in den obengenannten Anmeldungen bereits beschrieben ist.

Eine Besonderheit aller erfindungsgemäßen Ausführungsbeispiele besteht darin, daß die Wandung des Loches LO jeweils einen metallischen Belag DD aufweist, welcher als ein Abschnitt der ersten elektrischen Zuleitung dient, vgl. in Fig. 1 die erste Zuleitung aus mehreren gebondeten untereinander parallel geschalteten massiven Drähten D2, aus der großflächigen ringförmigen Elektrode E2 und aus dem Belag DD. Das Bauelement D weist bei den in den Figuren gezeigten Ausführungsbeispielen jeweils nur zwei Zuleitungen auf, wobei die zweite Zuleitung in Fig. 1 durch den massiven Leitungsdraht D1 und die großflächige Elektrode E1 gebildet wird. Zur Verringerung der Eigeninduktivität der zweiten Zuleitung und damit zur Erhöhung der Grenzfrequenz der Anordnung kann statt eines einzigen Drahtes D1 eine Mehrzahl untereinander parallel geschalteter Drähte D1 angebracht sein.

Die Zuleitungen in den Figuren 2 und 3 sind ähnlich aufgebaut. Die erste Zuleitung bei dem in Figur 2 gezeigten Beispiel wird alleine durch den Belag DD der Lochwandung gebildet, wobei die seitlichen Metallisierungen außerhalb des Loches einerseits zur Kontaktierung mit dem Bauelement D und andererseits für die Verbindung mit Transistoren (in der Figur nicht gezeigt) des Verstärkerchips V dienen. Die Transistoren des Verstärkerchips V werden über Drähte Z1 und Anschlußstifte Z von außen mit entsprechenden Potentialen versorgt, wobei ein Teil dieser Anschlußstifte Z auch hochfrequente Ströme leiten kann. Bei dem in Fig. 2 gezeigten Beispiel wird also der Träger D durch einen Verstärkerchip bzw. Halbleiterchip V gebildet. Der Träger T/Verstärkerchip V ruht seinerseits über einen ringförmigen Isolatorblock RP auf einer Bodenplatte P, die ihrerseits z. B. aus Metall sein kann und ein Bestandteil eines Metallgehäuses rund um die Anordnung sein kann. Zwischen dem ringförmigen Isolatorblock RP und dem Träger T ist noch eine Metallisierung D1A angebracht, welche einen Abschnitt der zweiten Zuleitung zum Bauelement D bildet und welcher bei dem gezeigten Beispiel über einen oder mehrere massive Drähte D1 an das Bauelement D durch Bonden verbunden sein kann. Diese Metallisierung D1A ist bei dem gezeigten Beispiel um die Kante nach oben geführt, wobei dort oben eine Verbindung mit Transistoren des Trägers T/Verstärkerchips V hergestellt sein kann. Eine solche Metallisierung D1A als Abschnitt der zweiten Zuleitung hat eine besonders geringe Eigeninduktivität und erhöht damit die Grenzfrequenz der Anordnung.

Bei dem in Fig. 3 gezeigten Beispiel ist der Halbleiterchip/Verstärkerchip V auf einem durch einem Isolator gebildeten Träger T angebracht. Sowohl der Verstärkerchip V als auch der Träger T haben jeweils Löcher LO, LOF, welche zueinander fluchtend angeordnet sind, wobei durch beide Löcher hindurch die optische Kopplung zwischen dem Bauelement D und dem Lichtleitsystem L eingerichtet ist. Bei dem in Fig. 3 gezeigten Beispiel ist der Belag DD der Lochwandung des Trägers T über eine Mehrzahl von untereinander parallel geschalteten massiven Bonddrähten D2 an eine ringförmige Elektrode rings um das fluchtende Loch LOF des Halbleiterchips V verbunden, und die erste Zuleitung besteht daher aus dieser ringförmigen Elektrode R, welche der Elektrode E2 in Fig. 1 entspricht, sowie aus den Bonddrähten D2 und dem metallischen Belag DD im Loch LO des Trägers T. Die zweite Zuleitung des Bauelements D besteht bei diesem Beispiel aus einem oder mehreren untereinander parallel geschalteten Bonddrähten D1, sowie einem Metallfleck E1, welcher bei Bedarf leitend mit einem metallischen Belag DD1 eines weiteren Loches LO1 des Trägers T verbindbar ist ; der evtl. rundum im Loch LO1 angebrachte Belag DD1 dient z. B. zur Induktivitätsverringerung, wobei dieser nach oben führende Belag DD1, besonders falls man die Eigenkapazitätserhöhung für zu unwichtig ansieht, auch über eine weitere Metallisierung und über Drähte D11 mit den Transistoren des Halbleiterchips V verbindbar ist. Die zweite Zuleitung besteht also bei dem in Fig. 3 gezeigten Beispiel aus Bonddrähten D11, aus Metallisierungen, die sich auch durch das Loch LO1 erstrecken, und aus Bonddrähten D1.

Im übrigen zeigt Fig. 3 grob beispielhaft, daß die mittels Isolatoren I isoliert nach außen geführten Anschlußstifte Z die elektrischen Anschlüsse der im Inneren des Metallgehäuses MG angebrachten Anordnung darstellen. Dieses Metallgehäuse MG dient zur optischen und zur elektrischen Abschirmung der Anordnung gegen Einflüsse der Umgebung sowie zur Langzeitstabilisierung der mit höchster Genauigkeit justierten optischen Kopplung zwischen dem Lichtleitsystem L und dem Bauelement D.

Der in Fig. 3 gezeigte Träger T kann ebenso wie der in Fig. 2 gezeigte ringförmige Block RP sowie der in Fig. 1 gezeigte Träger T auch durch eine $Al_2O_3$-Substratmasse gebildet sein. Das Loch LO, auch LOF und LO1, kann z. B. durch einen Laser gebohrt werden. Insbesondere wenn der Träger ein Halbleiterchip ist, vgl. Fig. 2, dann kann das Loch auch mit hoher Präzision durch Ätzen hergestellt werden.

Der metallische Belag DD, such DD1, an sich auch die Metallisierungen E1, E2, D1A, R können jeweils z. B. durch Siebdruck, auch Unterdruck-Siebdruck, sowie im Falle von Silizium als Substrat durch Epitaxie hergestellt sein.

Der Halbleiterchip V, vgl. insbesondere Fig. 2 und 3, kann, trotz des metallischen Belages an seiner Lochwandung, innerhalb der Anordnung für sich geprüft werden, unabhängig davon ob das Bauelement D bereits montiert ist oder noch nicht. Ebenso ist das Bauelement D nach seiner Montage im Prinzip unabhängig von dem Halbleiterchip V prüfbar, was insbesondere bei der in Fig 2 und 3 gezeigten Anordnung wichtig ist, weil dort das Bauelement D nach dem Anbringen der Platte P nur noch schwer zugänglich ist.

Der metallische Belag in dem Loch LO, auch ein evtl., vgl. Fig. 3, im fluchtenden Loch LOF angebrachter metallischer Belag haben auch lichtreflektierende Eigenschaften, wodurch Streulichtverluste im Prinzip verringert werden können, soweit dazu ein Bedarf besteht. Weil hierbei der metallische Belag in der Lochwandung rundum voll das Loch LO auskleidet, ist nämlich die Lichtreflexion dieses Belags jeweils besonders groß.

Bei allen in den Figuren gezeigten Beispielen ist die zweite Zuleitung, vgl. E1/D1, zum Bauelement D an (bzw. über) der dem Bauelement D zugewandten rückseitigen Oberfläche des Trägers T angebracht. Dadurch kann man die Kapazität zwischen den beiden Zuleitungen kleiner machen als wenn beide Zuleitungen eng nebeneinander auf der vom Bauelement D abgewandten Trägeroberfläche verlaufen würden.

Die Anschlußdrähte D1, auch die Anschlußdrähte D2, vgl. Fig. 1 und 3, sollten möglichst kurz sein, damit die Eigenkapazität und Eigeninduktivität dieser Drähte möglichst gering ist. Die Eigeninduktivität dieser Drähte kann dadurch weiter verringert werden, daß mehrerer solche Drähte jeweils einander parallel geschaltet angebracht werden, wie bereits erwähnt wurde.

Die Erfindung gestattet also besonders niedrige Eigeninduktivitäten (und Eigenkapazitäten) der Zuleitungen zu erreichen, wodurch die obere Grenzfrequenz der Anordnung entsprechend hoch wird.

## Patentansprüche

1. Optoelektronische Anordnung zur Umsetzung von Licht in Spannung bzw. Strom oder von Spannung bzw. Strom in Licht, mit
- einem Lichtleitsystem (K, L), z. B. einer Linse (K) und/oder Glasfaser (L),
- einem Träger (T), auf welchem ein optoelektronisches Bauelement (D) mit zumindest zwei elektrischen Zuleitungen (E1/D1, E2/D2/DD) befestigt ist, sowie

- einem so angebrachten Loch (LO) durch den Träger (T), daß die optisch aktive Stelle des Bauelementes (D) durch das Loch (LO) hindurch auf das Lichtleitsystem (K, L) ausgerichtet ist,
- einer Lochwandung, die einen metallischen Belag (DD) aufweist, der das Loch (DD) rundum voll auskleidet und im Betrieb einen Abschnitt der ersten, Hochfrequenzströme aufweisenden Zuleitung des Bauelementes (D) darstellt, dadurch gekennzeichnet, daß
- das Lichtleitsystem höchstens ein kurzes Stück in das Loch hineinragt, dabei aber keinen Kontakt mit dem Belag der Lochwandung herstellt und daß somit der Belag der Lochwandung als Reflektor für gestreutes Licht ausgenutzt wird.

2. Anordnung nach Patentanspruch 1, dadurch gekennzeichnet, daß die zweite Zuleitung (E1/D1) zum Bauelement (D) an bzw. über der dem Bauelement (D) zugewendeten rückseitigen Oberfläche des Trägers (T) angebracht ist.

3. Anordnung nach Patentanspruch 2, dadurch gekennzeichnet, daß der Träger (T) ein zweites Loch (LO1) mit einem zumindest teilweise metallisch ausgekleidetem eigenen Belag (DD1) aufweist, welcher einen Abschnitt der zweiten Zuleitung (E1/D1) bildet.

4. Anordnung nach Patentanspruch 2 oder 3, dadurch gekennzeichnet, daß als Endstück der zweiten Zuleitung (E1, D1) bei der entsprechenden Kontaktstelle des Bauelementes (D) ein massiver Anschlußdraht (D1) angebracht ist.

5. Anordnung nach Patentanspruch 4, dadurch gekennzeichnet, daß mehrere elektrisch einander parallel geschaltete Anschlußdrähte (D1) angebracht sind.

6. Anordnung nach einem der vorhergehenden Patentansprüche, dadurch gekennzeichnet, daß der Träger (T) ein Halbleiterchip (V) ist (Fig. 2).

7. Anordnung nach einem der Patentansprüche 1 bis 5, dadurch gekennzeichnet, daß der Träger (T) eine Isolatorplatte ist, auf welcher ein selber ein Loch (LOF) aufweisender Halbleiterchip (V) so auf der von dem Bauelement (D) abgewandten Trägeroberfläche befestigt ist, daß das Loch (LO) im Träger (T) mit dem Loch (LOF) im Halbleiterchip (V) fluchtet (Fig. 3).

8. Anordnung nach einem der vorhergehenden Patentansprüche, dadurch gekennzeichnet, daß der Träger (T) und das Bauelement (D) im Inneren eines Metallgehäuses (MG), welches elektrisch isolierte (I) Zuleitungsstifte (Z) sowie eine Öffnung für die Durchführung des Lichtleitsystems (L) aufweist, angebracht ist.

## Claims

1. An opto-electronic transducer arrangement for converting light into voltage or current, and/or for converting voltage or current into light, comprising :
- a light-conducting system (K, L), e. g. a lens (K) and/or glass-fibre (L) ;
- a carrier (T) on which an opto-electronic transducer component (D) with at least two electric supply lines (E1/D1, E2/D2, DD) is attached ; and

- a hole (LO) extending through the carrier (T) and arranged in such manner that the optically active location of the transducer component (D) extends through the hole (LO) to the light-conducting system (K, L) ;

- hole walls which are provided with a metallic covering (DD) which fully clads the hole (DD) all round and, during operation, represents a subsection of the first supply line of the transducer component (D), which line carries high-frequency currents :

characterised in that

- the light-conducting system projects into the hole by a short distance at most, but does not thereby establish a contact with the covering of the walls of the hole, and that the covering of the hole walls is thus used as a reflector for any scattered light.

2. An arrangement as claimed in Claim 1, characterised in that the second supply line (E1/D1) to the transducer component (D) is arranged on or above the rear-side surface of the carrier (T) which faces towards the transducer component (D).

3. An arrangement as claimed in Claim 2, characterised in that the carrier (T) contains a second hole (LO1) provided with its own, at least partially metallically clad covering (DD1) which forms a sub-section of the second supply line (E1/D1).

4. An arrangement as claimed in Claim 2 or 3, characterised in that, by way of a terminal component of the second supply line (E1, D1), a solid terminating wire (D1) is arranged at the corresponding contact position of the transducer component (D).

5. An arrangement as claimed in Claim 4, characterised in that a plurality of electrically parallel-connected terminal wires (D1) are provided.

6. An arrangement as claimed in one of the preceding Claims, characterised in that the carrier (T) is a semiconductor chip (V) (Figure 2).

7. An arrangement as claimed in one of Claims 1 to 5, characterised in that the carrier (T) is an insulating plate on which a semiconductor chip (V), which itself contains a hole (LOF), is attached to the carrier surface facing away from the transducer component (D), in such manner that the hole (LO) in the carrier (T) is aligned with the hole (LOF) in the semiconductor chip (V) (Figure 3).

8. An arrangement as claimed in one of the preceding Claims, characterised in that the carrier (T) and the transducer component (D) are arranged inside a metal housing (MG) which is provided with electrically insulated (I) supply pins (Z) and an opening for the passage of the light-conducting system (L).

**Revendications**

1. Dispositif optoélectronique pour convertir de la lumière en une tension ou un courant ou pour convertir une tension ou un courant en lumière, comprenant

- un système de conduction de la lumière (K, L), formé par exemple d'une lentille (K) et/ou d'une fibre de verre (L),

- un support (T) sur lequel est fixé un composant optoélectronique (D) qui présente au moins deux connexions électriques (E1/D1, E2/D2/DD),

- un trou (LO) pratiqué à travers le support (T) de manière que l'endroit optiquement actif du composant (D) soit centré sur le système de conduction de la lumière (K, L) à travers le trou (LO) et

- une paroi de trou qui présente un revêtement métallique (DD) qui recouvre le trou (LD) entièrement, tout autour, et constitue en service une partie de la première connexion du composant (D), connexion qui est parcourue par des courants de haute fréquence,

caractérisé en ce que

- le système de conduction de la lumière pénètre tout au plus sur une faible distance dans le trou, mais sans venir en contact avec le revêtement de la paroi du trou, et que, ainsi, le revêtement de la paroi du trou est utilisable comme un réflecteur pour la lumière dispersée.

2. Dispositif selon la revendication 1, caractérisé en ce que la seconde connexion (E1/D1) du composant (D) est disposée sur ou par-dessus la face arrière du support (T), dirigée vers le composant (D).

3. Dispositif selon la revendication 2, caractérisé en ce que le support (T) présente un second trou (LO1) dont la paroi est recouverte en partie au moins d'un revêtement métallique (DD1) indépendant, lequel forme une partie de la seconde connexion (E1/D1).

4. Dispositif selon la revendication 2 ou 3, caractérisé en ce que le tronçon terminal de la seconde connexion (E1/D1) sur le point de contact approprié du composant (D) est un fil de raccordement massif (D1).

5. Dispositif selon la revendication 4, caractérisé en ce que plusieurs fils de raccordement (D1) connectés électriquement en parallèle sont prévus.

6. Dispositif selon une des revendications précédentes, caractérisé en ce que le support (T) est une pastille à semi-conducteurs (V) (Fig. 2).

7. Dispositif selon une des revendications 1 à 5, caractérisé en ce que le support (T) est un isolateur en forme de plaque, sur lequel est disposée une pastille à semi-conducteurs (V), qui présente elle-même un trou (LOF) et est disposée sur la face du support opposée au composant (D), de manière que le trou (LO) du support (T) soit aligné avec le trou (LOF) de la pastille à semi-conducteurs (V) (Fig. 3).

8. Dispositif selon une des revendications précédentes, caractérisé en ce que le support (T) et le composant (D) sont logés à l'intérieur d'un boîtier métallique (MG) qui présente des broches de connexion (Z) électriquement isolées (I), de même qu'une ouverture pour la traversée du système de conduction de la lumière (L).

# FIG 1

# FIG 2

# F I G 3